# DEMANDE DE BREVET EUROPEEN

(11) **EP 0 889 566 A1**
(43) Date de publication de la demande: **07.01.1999**
(21) Numéro de dépôt: 98810604.3
(22) Date de dépôt: 29.06.1998
(51) Int. Cl.: H02G 3/04

(54) **Tube d'isolation "Somo-Clip"**

(30) Priorité: 02.07.1997 CH 1607/97
(71) Demandeur: Swisspipe, 1262 Eysins (CH)
(72) Inventeur: Crespi, Michel, 1262 Eysins (CH)

(57) **Abrégé**

Tube cylindrique en polyéthylène comprenant d'une part une découpe longitudinale (1) et à l'opposé de celle-ci une encoche longitudinale (4) et, d'autre part, une languette (5) située également dans le sens de la longueur à l'intérieur du tube, à gauche de l'entaille (1). La combinaison de la découpe longitudinale (1) et de l'encoche (4) permet d'écarter la gaine de protection afin d'y insérer un câble (6). La propriété de rétractation d'un cylindre en polyéthylène combinée avec la languette (5) incrustée à l'intérieur du tube garantit la fermeture automatique de la gaine tout en limitant son resserrement interne par rapport au diamètre du câble (6) à protéger.

## Description

Le but de la présente invention est de créer un nouveau produit (le "SOMO--CLIP) apte à protéger efficacement des câbles provisoires utilisés par exemple sur des chantiers et autres installations ainsi que des câbles "anciens" sans gaine de protection (suffisante) lors de leur installation.

La protection de tels câbles existants ou en phase d'installation peut être assurée au moyen de gaines à l'intérieur desquelles les câbles sont introduits. Cela permet d'éviter que le câble en question ne subisse des détériorations en raison d'une force extérieure de quelque nature que ce soit.

Il est courant de recourir à l'emploi de tubes cylindriques pour assurer la protection de câbles. Cependant, ce système est difficile à mettre en oeuvre lorsqu'il s'agit de préserver un câble existant. Dans ce cas de figure, il était (est) fréquent de sectionner le câble afin de pouvoir l'introduire à l'intérieur de la gaine; cette solution entraîne inévitablement l'inutilisation temporaire du câble concerné (coupure de courant, de communication etc.) Ainsi qu'un travail supplémentaire pour sa remise en état.

En raison des difficultés ci-avant exposées, ont été développés des tuyaux ou gaines (principalement en matière plastique) incisés dans le sens de la longueur de manière à permettre l'insertion du câble à protéger. L'ouverture du tube (soit l'élargissement de l'entaille longitudinale en fonction du diamètre du câble à introduire) de même que sa fermeture implique, dans le cadre des divers systèmes utilisés à ce jour (et, pour certains, brevetés) des opérations et mécanismes techniques indispensables (voir notamment le brevet suisse N° 652 249 A5 "Symalit").

La présente découverte consiste en un tube cylindrique en polyéthylène comprenant d'une part une découpe longitudinale (1) et à l'opposé de celle-ci une encoche longitudinale (4) et, d'autre part, une languette (5) située également dans le sens de la longueur à l'intérieur du tube, à gauche de l'entaille (1).

L'encoche longitudinale (4, figure N°1) est pratiquée dans une seconde étape, des suites du processus de fabrication. L'encoche proprement dite apparaît sur les figures N° 2 et 3.

La combinaison de la découpe longitudinale (1) et de l'encoche (4) permet d'écarter sans la moindre difficulté la gaine de protection (en particulier sans recourir à des objets/outils pour "forcer" l'élargissement du tube) afin d'y insérer un câble (6) dont le diamètre maximum représente le tiers (1/3) du diamètre du tube en polyéthylène.

La propriété de rétractation d'un cylindre en polyéthylène combinée avec la languette (5) incrustée à l'intérieur du tube garantit la fermeture automatique de la gaine (sans l'apport d'un mécanisme de fermeture quelconque) tout en limitant son resserrement interne par rapport au diamètre du câble (6) à protéger.

La fabrication de ce tube de protection (y compris la découpe et la languette longitudinale (5) résulte d'une seule et même extrusion; en particulier, le processus de fabrication ne comprend aucune phase spécifique visant à incorporer ou adjoindre sur le tube en cause un système de fermeture ad hoc.

Les détails de l'invention sont mis en évidence ci-dessous et s'articulent autour de trois descriptions mettant en lumière les caractéristiques de cette invention:

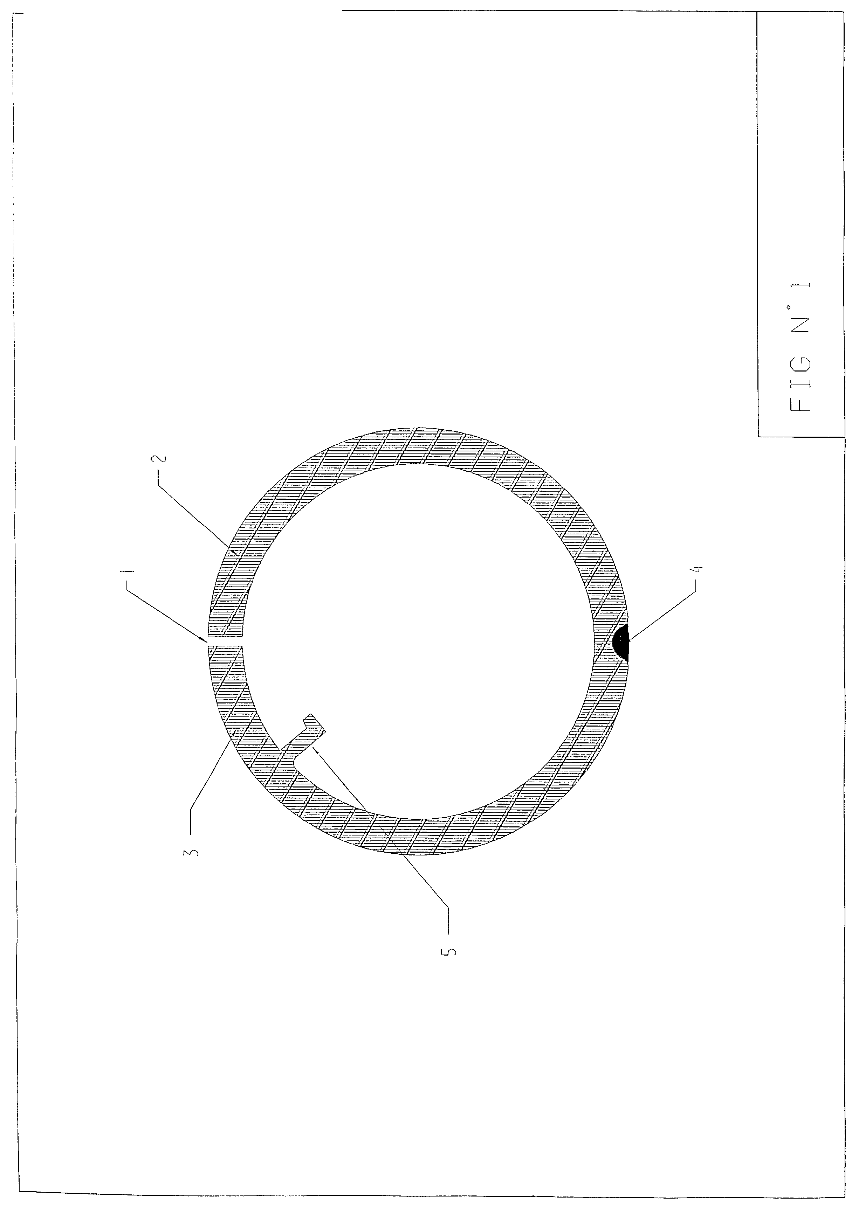

- Fig. N° 1:: Coupe transversale du tube en polyéthylène tel qu'il apparaît à la fin du processus de fabrication. Le tube comporte une incision (1); une languette (saillie) se dégage (5) de la partie interne du tube, à faible distance de l'incision (1).

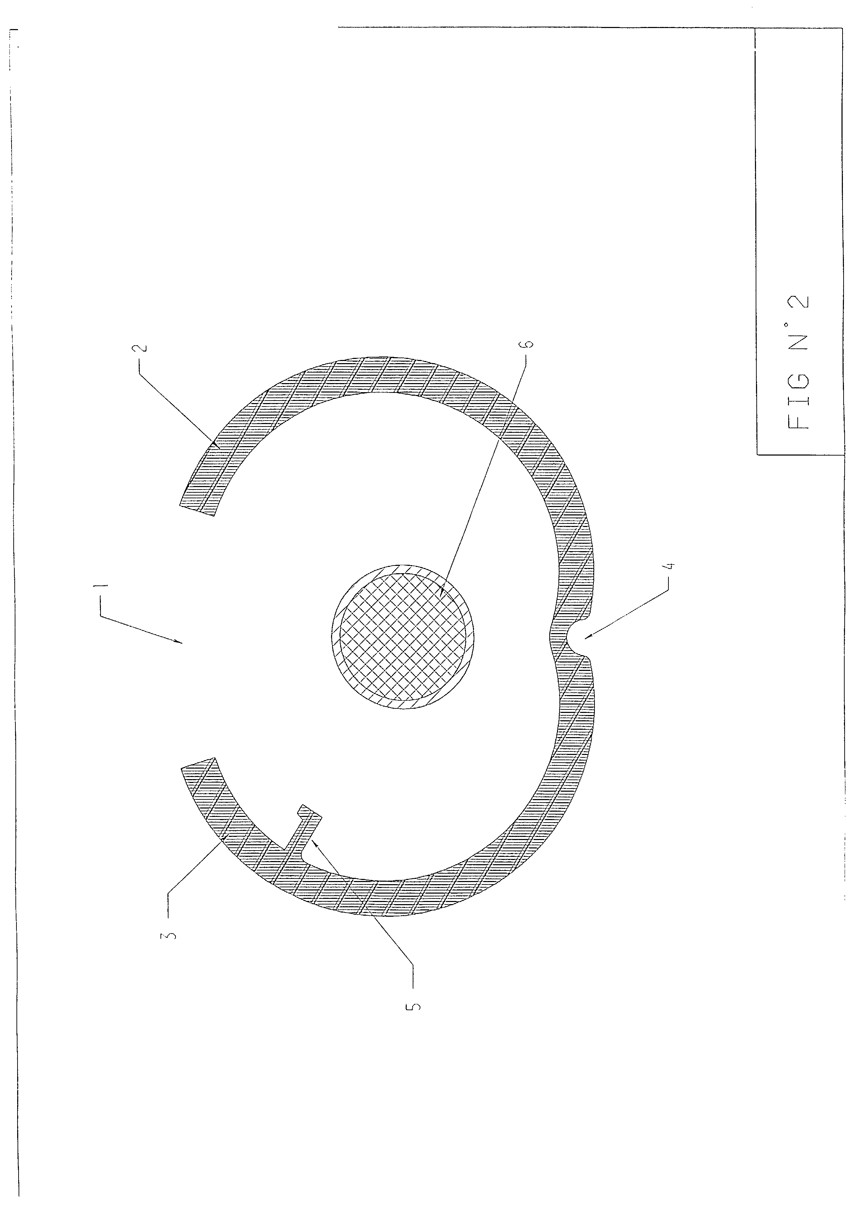

- Fig. N° 2:: Coupe transversale de l'ouverture de la gaine (1) permettant l'introduction du câble à protéger (6). L'écartement du tube pratiqué au niveau de l'incision (1) est rendu possible grâce à l'encoche externe (4) située à l'opposé de cette incision (1).

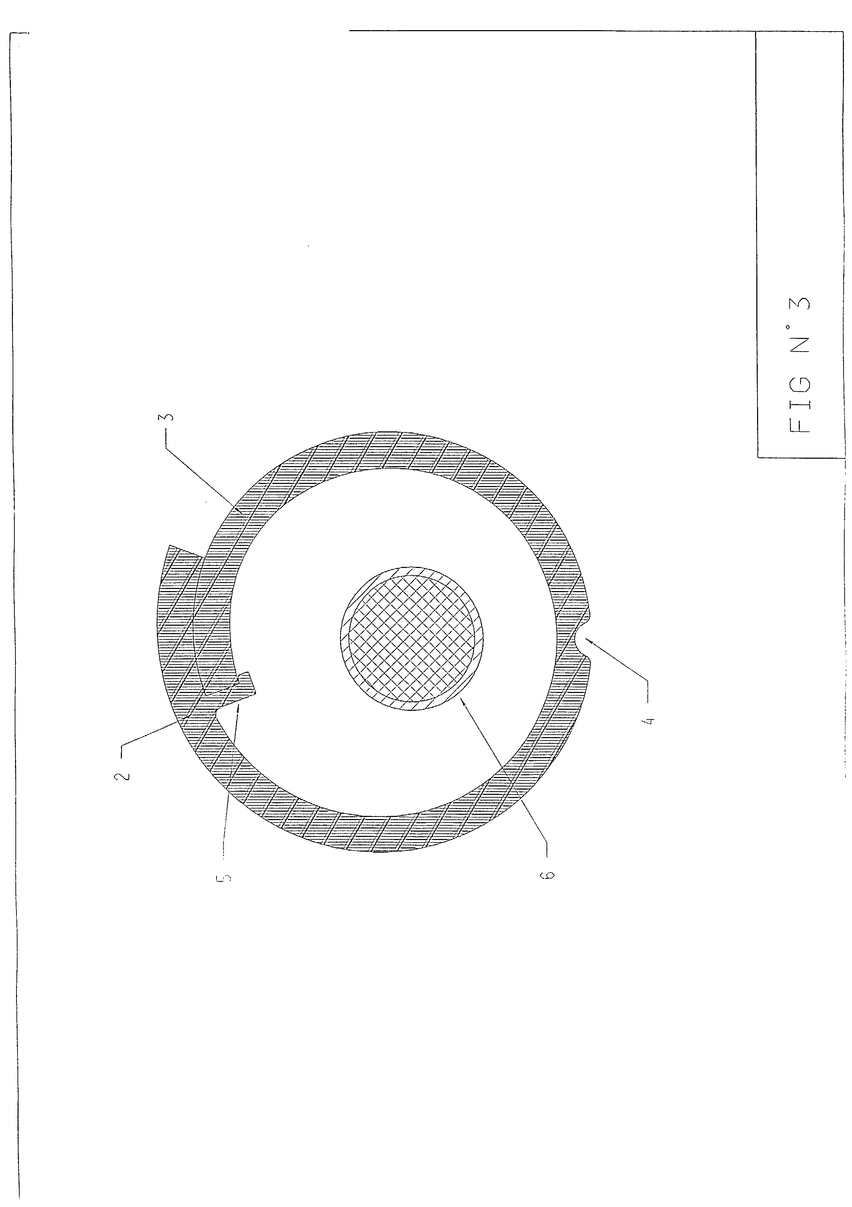

- Fig. N° 3:: Coupe transversale du tube qui s'est refermé de par le phénomène de rétractation du polyéthylène; ce processus de rétractation est limité au moyen de la languette (5) conservant ainsi un espace intérieur minimal et évitant par la-même un étranglement du câble (6) qui a été inséré dans la gaine de protection.

**La figure N°1** représente une coupe transversale du tube en polyéthylène à la fin de la chaîne de fabrication, c'est-à-dire un tube cylindrique (2 et 3). Le tube a été sectionné sur toute sa longueur (1), lors de l'extrusion. Toujours durant le processus de fabrication par extrusion, une languette (5) a été formée à l'intérieur du tube, sur la gauche de l'entaille (1).

**La figure N°2** représente une coupe du tube en polyéthylène dont les deux parties situées à droite (2) et à gauche (3) de l'incision longitudinale (1) ont été écartées sans difficulté, en particulier sans avoir besoin de recourir à un outil/objet élargisseur, grâce à l'encoche réalisée dans une seconde étape d'usinage(4), permettant ainsi de placer à l'intérieur du tube le câble à protéger (6). Il faut relever qu'un câble peut être introduit dans le tube en polyéthylène grâce, d'une part, à la flexibilité du matériau utilisé, soit le polyéthylène, et, d'autre part, à l'absence de tout système de fermeture susceptible d'obstruer partiellement l'espace (1) créé par l'ouverture du tube.

**La figure N°3** met en évidence un aspect fondamental de la présente invention, à savoir la protection du câble (6) placé à l'intérieur du tube sans avoir recours à un quelconque mécanisme/système de fermeture incorporé à l'emplacement de la coupure. En raison des propriétés physiques du polyéthylène, suite à l'ouverture du tube, celui-ci se rétracte sur lui-même, étant précisé que ce phénomène de rétractation s'exerce de façon permanente. Le tube incisé (2 et 3) se referme sur lui-même de al façon suivante:
la partie du tube située à gauche de l'incision (3) s'enroule automatiquement par dessus la partie droite du tube (2) jusqu'à ce que cette dernière vienne buter sur la languette (5) placée sur la partie interne gauche du tube (3).

Par conséquent, l'introduction d'un câble (6) à l'intérieur de ce tube en polyéthylène (SOMO-CLIP) est une opération simple, rapide et ne nécessitant aucune mécanisme/système pour l'ouverture ou la fermeture de cette gaine de protection, tel le système de fermeture développé dans le brevet suisse N° 652 249 A5 (SYMALIT).

## Revendications

1. Tube de protection pour câbles caractérisé en ce qu'il est constitué par un tube en polyéthylène présentant une encoche externe longitudinale (4), qui, conjuguée avec l'entaille (1) pratiquée à l'opposé de cette encoche longitudinale, permet, lorsque l'entaille (1) a été suffisamment écartée, d'introduire un câble (6) à l'intérieur du tube; la propriété de rétractation du polyéthylène fait que le tube se referme de manière automatique protégeant ainsi de manière efficace le câble (6) introduit d'éventuelles détériorations dues à une force extérieure de quelque nature que ce soit.

2. Tube de protection selon revendication précédente caractérisé en ce que les parties situées à gauche (2) et à droite (3) de l'incision (1) longitudinale peuvent être écartées sans avoir besoin de recourir à un outil /objet élargisseur grâce à l'encoche (4) située à l'opposé de l'incision (1)

3. Tube de protection selon revendication N° 1 caractérisé en ce que la propriété de rétractation d'un cylindre en polyéthylène garantit la fermeture automatique du tube de protection sans l'apport d'un mécanisme de fermeture quelconque,

4. Tube de protection caractérisé en ce que le tube résulte d'une seule extrusion, à savoir que le processus de fabrication du tube comprend la découpe du tube cylindrique, l'entaille (1), ainsi que la languette longitudinale (5) et qu'en conséquence, aucun apport d'une quelconque autre phase spécifique visant à incorporer ou adjoindre sur le tube , à l'endroit de l'entaille (1), un système de fermeture ad hoc.

5. Tube de protection, selon les revendications précédentes, caractérisé en ce que la languette incrustée à l'intérieur du tube limite le resserrement interne à l'intérieur du tube par rapport au diamètre du câble à protéger.
